# EUROPEAN PATENT SPECIFICATION

(11) **EP 1 176 298 B1**
(45) Date of publication and mention of the grant of the patent: **14.12.2005**
(21) Application number: 01117203.8
(22) Date of filing: 16.07.2001
(51) Int. Cl.: F02D 41/02, F01N 3/08, F02D 41/40

(54) **Emission control system and method for internal combustion engine**
Abgasemissionssteuerungssystem und Verfahren für Verbrennungsmotoren
Système et méthode de commande de l'émission des gaz d'échappement pour moteurs à combustion interne

(30) Priority: 24.07.2000 JP 2000223147
(43) Date of publication of application: 30.01.2002
(73) Proprietor: Toyota Jidosha Kabushiki Kaisha, Toyota-shi, Aichi-ken 471-8571 (JP)
(72) Inventor: Kobayashi, Masaaki, Toyota-shi, Aichi-ken, 471-8571 (JP); Matsushita, Souichi, Toyota-shi, Aichi-ken, 471-8571 (JP); Tsukasaki, Yukihiro, Toyota-shi, Aichi-ken, 471-8571 (JP); Matsuoka, Hiroki, Toyota-shi, Aichi-ken, 471-8571 (JP); Hayashi, Kotaro, Toyota-shi, Aichi-ken, 471-8571 (JP); Ishiyama, Shinobu, Toyota-shi, Aichi-ken, 471-8571 (JP); Ohtsubo, Yasuhiko, Toyota-shi, Aichi-ken, 471-8571 (JP); Magarida, Naofumi, Toyota-shi, Aichi-ken, 471-8571 (JP); Shibata, Daisuke, Toyota-shi, Aichi-ken, 471-8571 (JP); Negami, Akihiko, Toyota-shi, Aichi-ken, 471-8571 (JP); Oda, Tomihisa, Toyota-shi, Aichi-ken, 471-8571 (JP); Harada, Yasuo, Toyota-shi, Aichi-ken, 471-8571 (JP); Ono, Tomoyuki, Toyota-shi, Aichi-ken, 471-8571 (JP)
(74) Representative: TBK-Patent

(56) References cited:
- EP-A- 0 761 286
- EP-A- 1 001 154
- EP-A- 1 108 876
- US-A- 4 452 040
- US-A- 6 082 325
- PATENT ABSTRACTS OF JAPAN vol. 1997, no. 04, 30 April 1997 (1997-04-30) & JP 08 338229 A (TOYOTA MOTOR CORP), 24 December 1996 (1996-12-24)

## Description

### BACKGROUND OF THE INVENTION

### 1.Field of the Invention

The invention relates to an emission control system and an emission control method for an internal combustion engine.

### 2.Description of the Related Art

Known types of emission control systems for purifying exhaust gas emitted from internal combustion engines such as diesel engines and gasoline engines use a catalytic converter incorporating a catalyst such as a lean NOx catalyst, a three-way catalyst, and/or a particulate filter for removing particulates, including soot and so-called particulate matters contained in the exhaust gas.

The lean NOx catalyst indicated above is capable of purifying exhaust gases emitted from internal combustion engines including, for example, diesel engines and lean-burn gasoline engines. Examples of the NOx catalyst include a selective-reduction type NOx catalyst and an occlusion-reduction type NOx catalyst.

The occlusion-reduction type NOx catalyst (hereinafter simply referred to as a NOx catalyst) includes (a) a support formed of, for example, alumina (Al₂O₃), (b) at least one element carried on the support and selected from alkali metals such as potassium (K), sodium (Na), lithium (Li) and cesium (Cs), alkali earth metals such as barium (Ba) and calcium (Ca), and rare earth metals such as lanthanum (La) and yttrium (Y), and (c) at least one noble metal such as platinum (Pt) also carried on the support.

The NOx catalyst is capable of absorbing nitrogen oxides (NOx) when the air-fuel ratio of an exhaust gas that enters the NOx catalyst is fuel-lean, and is capable of releasing the absorbed NOx when the oxygen concentration of the exhaust gas is lower than a given limit, thus reducing the NOx into N₂. The NOx catalyst, therefore, functions to absorb and release NOx.

In the lean-burn internal combustion engine, the exhaust gas emitted during normal operation of the engine is fuel-lean, namely, the air/fuel ratio of the exhaust gas (hereinafter referred to as "exhaust air/fuel ratio") is higher than the stoichiometric value. Therefore, the NOx in the exhaust gas is absorbed by the NOx catalyst when it is used for an emission control system for the internal combustion engine. However, the NOx absorbing ability of the NOx catalyst is limited, and is eventually saturated or disabled to continuously function to absorb NOx, resulting in releasing of NOx into the atmosphere without purification. To prevent the releasing of NOx into the atmosphere, it is required to recover the original NOx absorbing ability of the NOx catalyst. That is, the NOx which has been absorbed in the NOx catalyst must be released so that the NOx catalyst is restored to the initial state. To effect the recovery of the NOx absorbing ability of the NOx catalyst, the NOx is released from the NOx catalyst by making the exhaust gas fuel-rich to thereby extremely reduce the oxygen concentration of the exhaust gas that enters the NOx catalyst. The exhaust gas is made fuel-rich in predetermined timing before the NOx catalyst is saturated with the NOx. Additionally, HC content of the exhaust gas is increased to release the NOx that has been absorbed in the NOx catalyst so as to reduce the NOx into N₂, thus recovering the NOx absorbing ability.

In the emission control system using the lean NOx catalyst, it is necessary to control the exhaust air/fuel ratio to the stoichiometric value or fuel-rich intermittently so as to remove the NOx.

The exhaust gas emitted from the engine by combustion of the fuel also contains sulfur oxides (hereinafter referred to as "SOx" where appropriate), since the fuel includes a sulfur component. The SOx is absorbed by the NOx catalyst of the occlusion-reduction type by the same mechanism by which the NOx is absorbed. The NOx removal capability or efficiency of the NOx catalyst is reduced by the amount of the SOx absorbed in the NOx catalyst. That is, the occlusion-reduction type NOx catalyst suffers from so-called "S poisoning", which is deterioration of the NOx removing function of the NOx catalyst due to the absorption of the SOx. The NOx catalyst suffering from the S poisoning must also be recovered. A treatment to recover the SOx-poisoned NOx catalyst will be referred to as an S-poisoning recovery process.

To implement the S-poisoning recovery process, the exhaust gas that is fed to the NOx catalyst is made stoichiometric or fuel-rich, and the temperature of the NOx catalyst is increased to about 600-650°C. The NOx catalyst is heated to such a high temperature, since the SOx is more difficult to be released than the NOx.

Meanwhile, the diesel engine is provided with a particulate filter in an exhaust passage for trapping or collecting particulate matters such as soot contained in the exhaust gas to be removed. To prevent clogging or plugging of the particulate filter with the particulate matters accumulated therein, the particulate matters need to be removed from the particulate filter by burning the particulate matters trapped thereon. A treatment to restore the particulate filter to its initial state in which the particulate matters are not contained therein is called "particulate filter regeneration process". There is also known a technique to provide the particulate filter with a catalyst, such as a three-way catalyst or a lean NOx catalyst, for removing harmful components, such as hydrocarbon (HC), carbon monoxide (CO) and nitrogen oxides (NOx), contained in the exhaust gas, as well as simultaneously removing the particulate matters including soot. In this case, too, the air/fuel ratio of exhaust gas is controlled to a value which is smaller than usual, or to a stoichiometric value or fuel-rich for the same reason as stated above.

On the particulate filter that carries the NOx catalyst as described above, the particulate matters collected by the filter are not ignited and burned unless the filter temperature is raised to a high level around 500°C, and the unburned particulate matters are accumulated on the filter. Since the exhaust temperature of the diesel engine is generally lower than 500°C, there is a need to raise the filter temperature so as to burn and remove the particulate matters.

It is difficult to increase the catalyst temperature to recover the catalyst from S-poisoning or to burn the accumulated particulates to be removed because of the low-temperature exhaust gas emitted from the engine during a lean-burn operation. Accordingly, there is a known technique for raising the catalyst temperature by delivering the fuel into the exhaust passage so as to raise the catalyst temperature.

According to a technique as disclosed in JP-A-11-229855, for example, an additional fuel is injected (into a combustion chamber) during an expansion stroke, so that the injected fuel does not significantly affect the engine output. The fuel thus injected is burned to thereby make the exhaust air/fuel ratio rich, and supply the NOx catalyst with HC and CO, so that the catalyst is heated to a sufficiently high temperature, and SOx is released from the catalyst.

In the aforementioned technique as disclosed in JP-A-11-229855, the S-poisoning recovery treatment is performed without taking account of the engine operating state. So the rate of increase of the NOx catalyst temperature may become low depending on the operating state of the engine. In this case, more fuel has to be consumed for heating the NOx, thus deteriorating the fuel efficiency. The S-poisoning recovery treatment cannot be performed at an appropriate timing, resulting in the delay in S-poisoning recovery treatment.

If the air/fuel ratio is controlled to be rich for S-poisoning recovery treatment with totally no regard to the operating state of the engine, for example, if a rich air/fuel mixture is burned during a normal operation of a diesel engine, the fuel economy may deteriorate, and smoke or misfire may result from the rich operation, to thereby deteriorate the engine operating state. Additionally, when the fuel is injected during deceleration, the engine output is increased upon combustion of the fuel, and accordingly, the vehicle operator may feel uncomfortable during the deceleration.

There is also a known technique to control the air/fuel ratio to be in the vicinity of the stoichiometric value by reducing the intake air amount with an electronic controlled throttle valve. As a step of control of a motor for driving (opening and closing) the throttle valve is relatively large, it is difficult to perform fine control of the opening amount of the throttle valve. When an attempt to burn an air-fuel mixture of around the stoichiometric air/fuel ratio with a reduced quantity of new air, the actual quantity of the new air may largely vary within the throttle opening control range of the motor, and the resultant air/fuel ratio may deviate from the stoichiometric value. Thus, it is difficult to operate the engine at around the stoichiometric air/fuel ratio.

Furthermore, the earlier European Patent Application EP 1 108 876 which is relevant under Article 54(3) EPC, discloses a technique for raising a catalyst temperature, employing engine load and engine speed dependent fuel injection patterns. This disclosure does, however, not suggest increasing a main fuel injection quantity. Adding fuel into an exhaust passage is also not disclosed.

### SUMMARY OF THE INVENTION

It is an object of the invention to provide an emission control system for an internal combustion engine, which is capable of heating the catalyst rapidly by selecting a suitable control mode for increasing the catalyst temperature in accordance with the engine operating state.

An emission control system for an internal combustion engine is provided with a catalyst disposed in an exhaust passage of the internal combustion engine for purifying an exhaust gas that enters the catalyst; engine operating state detecting means for detecting an engine operating state of the internal combustion engine; catalyst temperature raising means capable of raising a temperature of the catalyst in a plurality of modes; and selecting means for selecting one mode from the plurality of modes based on a value detected by the engine operating state detecting means such that the catalyst temperature is raised. When the internal combustion engine is in a low load state, the catalyst temperature raising means raises the temperature of the catalyst in a first mode selected from the plurality of modes, by increasing an amount of a main fuel injected into the internal combustion engine so as to make an air/fuel ratio closer to a stoichiometric value, and by adding a fuel into the exhaust passage. When the internal combustion engine is in an intermediate load state, the catalyst temperature raising means raises the temperature of the catalyst in a second mode selected from the plurality of modes, by injecting an additional fuel after injecting the main fuel into the internal combustion engine, and by adding the fuel into the exhaust passage. When the internal combustion engine is in a high load state, the catalyst temperature raising means raises the catalyst temperature in a third mode selected from the plurality of modes, by adding the fuel into the exhaust passage.

In an emission control system for an internal combustion engine, the catalyst temperature raising means is actuated when the catalyst temperature is to be increased to recover the catalyst from S-poisoning, and the engine operating state is in an accelerating state or a steady state.

An emission control system for an internal combustion engine is provided with S-poisoning removing means for removing S poisoning such that an amount of a new air admitted into the internal combustion engine is reduced to make an air/fuel ratio closer to a stoichiometric value, and a fuel is added to the exhaust passage to make the air/fuel ratio of an exhaust gas flowing through the catalyst to be rich.

According to the invention, the engine operating state detector detects the engine operating state. In accordance with the detected engine operating state, a system for selecting a catalyst temperature increase mode is actuated to select the heating mode suitable to the detected state such that the catalyst is heated at an earlier stage. The invention is structured not to employ the catalyst heating mode to deliver excessive amount of the fuel when an amount of intake air is small. Therefore, an appropriate amount of the fuel can be delivered and the fuel efficiency can be improved.

In the invention, the device for reducing the amount of the new air may be employed in the form of, for example, an intake throttle valve, an exhaust throttle valve and the like. The control for reducing intake amount of the new air may be performed simultaneously with the control for delivering the fuel. This makes it possible to bring the air/fuel ratio into fuel-rich with the fuel as least as possible.

### BRIEF DESCRIPTION OF DRAWINGS

Fig. 1 is a view showing a general arrangement of an internal combustion engine that employs an emission control system according to the invention;
Fig. 2 is a flowchart illustrating a control routine executed by the emission control system for the engine;
Fig. 3 is a graph illustrating the process for controlling the catalyst temperature selected in accordance with the engine operating state;
Figs. 4A and 4B illustrate a particulate filter;
Figs. 5A and 5B illustrate oxidation of a particulate;
Figs. 6A, 6B and 6C illustrate how the particulate deposits on the particulate filter;
Fig. 7 is a graph illustrating a relation between an amount of the particulate that can be removed by oxidation and a particulate filter temperature; and
Figs. 8A and 8B illustrate how NOx is purified.

### DETAILED DESCRIPTION OF THE PREFERRED EMBODIMENT

An embodiment of an emission control system according to the invention will be described referring to the drawings.

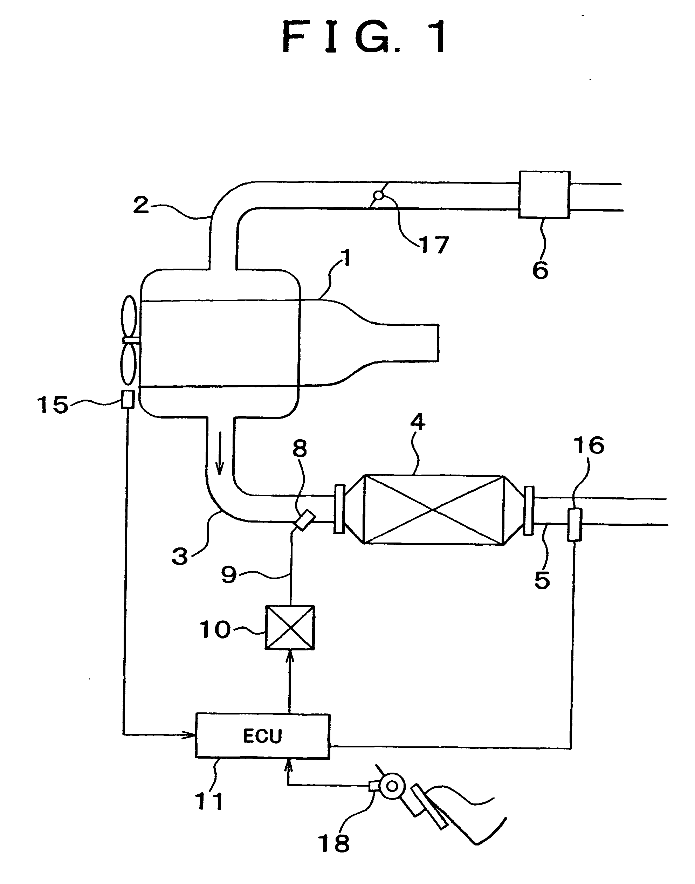

Fig. 1 illustrates a schematic view of a diesel engine of an automobile to which the invention is applied.

Fig. 1 shows an engine body 1, an intake passage 2, exhaust passages 3,5, a particulate filter 4, a fuel injection valve 8 for injecting the fuel as a reducing agent, a fuel pump 10, and an electronic control unit (ECU) 11 for controlling the engine (hereinafter referred to as "ECU"). The particulate filter 4 supports an occlusion-reduction type NOx catalyst.

The exhaust passage 5 disposed downstream of the filter 4 is provided with an air/fuel ratio sensor 16 for detecting an air/fuel ratio of an exhaust gas that has just passed through the filter 4. Meanwhile, the intake passage 2 is provided with an air flow meter 6 for measuring an intake air amount admitted into the engine body 1, and an electronic throttle valve 17 for adjusting the intake air amount.

The ECU 11 is formed by a digital computer, including a ROM (Read Only Memory), a RAM (Random Access Memory), a CPU (Central Processing Unit or microprocessor), an input port and an output port, which are connected with each other through a bidirectional bus.

The air/fuel ratio sensor 16 outputs a signal corresponding to the detected air/fuel ratio to the ECU 11. The air flow meter 6 outputs an output signal corresponding to an amount of new air to the ECU 11. The ECU 11, then, calculates an intake air amount based on the signal output from the air flow meter 6.

The ECU 11 is further connected to a crank angle sensor 15 for generating an output pulse at every rotation of a crank shaft, and to an accelerator opening sensor 18 for outputting a signal corresponding to an operation amount of the accelerator pedal.

### <Filter structure>

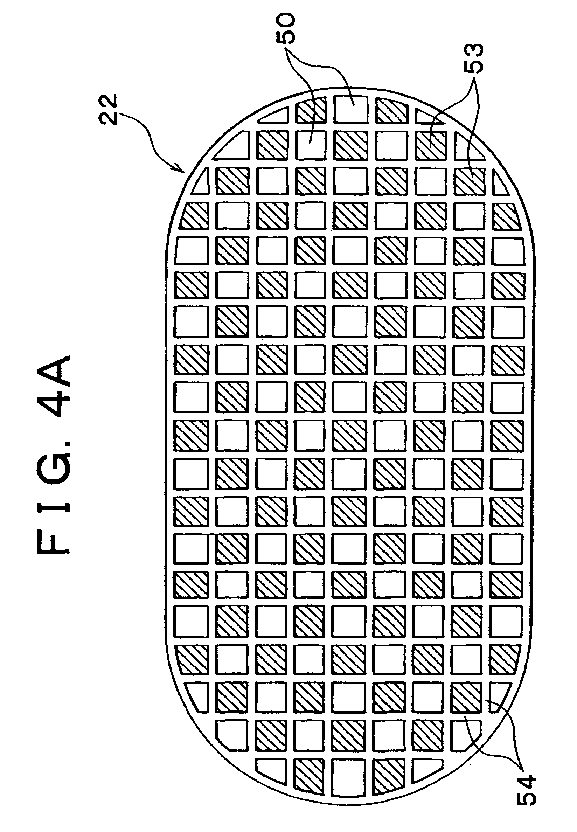

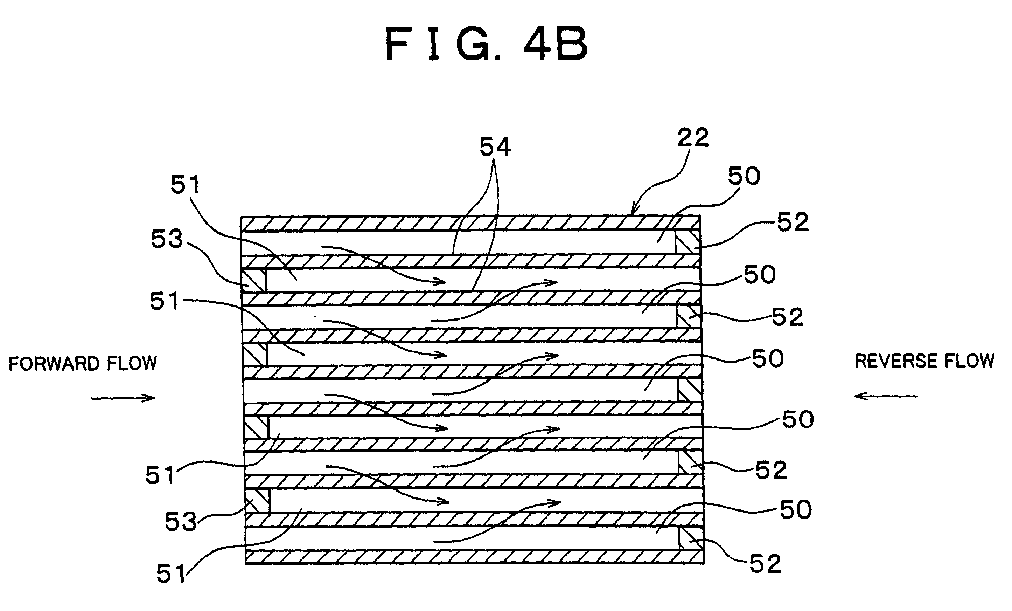

Fig. 4A is a front view of the particulate filter 4, and Fig. 4B is a sectional side elevation of the particulate filter 4. Referring to Figs. 4A and 4B, the filter 4 has a honeycomb structure of a wall flow type provided with a plurality of exhaust passages 50, 51 extending in parallel with each other. The exhaust passage 50 into which the exhaust gas enters has its downstream end sealed with a stopper 52. The exhaust passage 51 from which the exhaust gas is discharged has its upstream end sealed with a stopper 53. Referring to Fig. 4A, hatched portions indicate the respective stoppers 53. The exhaust passages 50, 51 are alternately arranged with thin wall partitions 51 interposed therebetween. That is, the exhaust passages 50, 51 are arranged such that each of the exhaust passages 50 is surrounded by four exhaust passages 51, and each of the exhaust passages 51 is surrounded by four exhaust passages 50.

The filter 4 is formed of a porous material such as cordierite. The exhaust gas enters into the exhaust passages 50 and flows into the adjacent exhaust passage 51, as shown by arrows in Fig. 4B, through the surrounding partitions 54.

In the embodiment of the invention, a support layer formed of, for example, alumina is formed on each peripheral wall surface of the exhaust passages 50, 51, that is, on both surfaces of each partition 54 and the inner wall surface of a minute pores of the partition 54. Carried on the support layer are a noble metal, an activated oxygen releasing agent, and a NOx absorbent. The activated oxygen releasing agent absorbs and stores excess oxygen in the surrounding atmosphere, and releases the absorbed oxygen in the form of the surrounding atmosphere is decreased. The NOx absorbent absorbs NOx when the exhaust gas that enters the filter 4 is fuel-lean, and releases the absorbed NOx when the oxygen concentration of the exhaust gas is decreased.

In this case, the term "air/fuel ratio of the exhaust gas that enters the NOx absorbent" represents the ratio of a total amount of the air supplied to the intake passage 2, combustion chambers (not shown), and the exhaust passage upstream of the NOx absorbent, to a total amount of the fuel supplied to these passages and chambers.

The noble metal catalyst may be formed of platinum (Pt). The activated oxygen releasing agent may be formed of at least one element selected from alkali metals including potassium (K), sodium (Na), lithium (Li), cesium (Cs), rubidium (Rb), alkali earth metals including barium (Ba), calcium (Ca), and strontium (Sr), rare earth metals including lanthanum (La) and yttrium (Y), and transition metals.

As the activated oxygen releasing agent, it is preferable to use alkali metals or alkali earth metals, such as potassium (K), lithium (Li), cesium (Cs), rubidium (Rb), barium (Ba), and strontium (Sr), exhibiting higher ionization tendency than that of calcium (Ca).

The NOx absorbent may be formed of at least one element selected from alkali metals including potassium (K), sodium (Na), lithium (Li), cesium (Cs) and rubidium (Rb), alkali earth metals including barium (Ba), calcium (Ca) and strontium (Sr), and rare earth metals including lanthanum (La) and yttrium (Y).

In the above case, it is preferable that the NOx absorbent be formed of at least one of alkali metals or alkali earth metals such as potassium (K), lithium (Li), cesium (Cs) rubidium (Rb), barium (Ba) and strontium (Sr), exhibiting higher ionization tendency than that of calcium (Ca).

As understood from the above description, the aforementioned metals used as the activated oxygen releasing agent are substantially identical to those used as the NOx absorbent. Different metals or the same metal may be employed as the activated oxygen releasing agent and the NOx absorbent. When the same metal is employed as the activated oxygen releasing agent and the NOx absorbent, it is expected to function as both the activated oxygen releasing agent and the NOx absorbing agent. The metal that performs the aforementioned functions will be hereinafter referred to as an "activated oxygen releasing/NOx absorbing agent".

In the present embodiment, the filter has an alumina support that carries thereon platinum (Pt) as the noble metal and potassium (K) as the activated oxygen releasing/NOx absorbing agent.

As described above, pottasium (K) as the activated oxygen releasing/NOx absorbing agent has both functions of releasing activated oxygen and absorbing NOx. In the emission control system of the invention, the function of releasing activated oxygen is utilized to enhance the capability of oxidizing and removing particulate matters contained in exhaust gas, and the function of absorbing NOx is utilized to remove Nox contained in the exhaust gas.

A mechanism of purification conducted in the emission control system will be described in view of the above-described functions.

### <Continuous Particulate Oxidation by filter : Function of releasing activated oxygen >

There will be described an operation to remove particulates contained in the exhaust gas by the filter 4, utilizing the activated oxygen releasing function of the activated oxygen releasing/NOx absorbing agent. Another metal selected from alkali metals, alkali earth metals, rare earth metals and transition metals may be employed as the activated oxygen releasing/NOx absorbing agent such that the particulates can be removed by the same mechanism.

In the diesel engine as shown in Fig. 1, fuel combustion is conducted in the presence of excessive air. So the resultant exhaust gas contains a large amount of air, that is, the exhaust air/fuel ratio of the diesel engine shown in Fig. 1 becomes fuel-lean. As NOx is generated as a result of fuel combustion in the combustion chamber at a high temperature, the resultant exhaust gas contains NOx. The fuel contains sulfur (S) which reacts with oxygen within the combustion chamber to produce SO₂. The resultant exhaust gas, thus, also contains SO₂. As a result, the exhaust gas containing excessive oxygen, NOx, and SO₂ flows into the exhaust passage 50 of the filter 4.

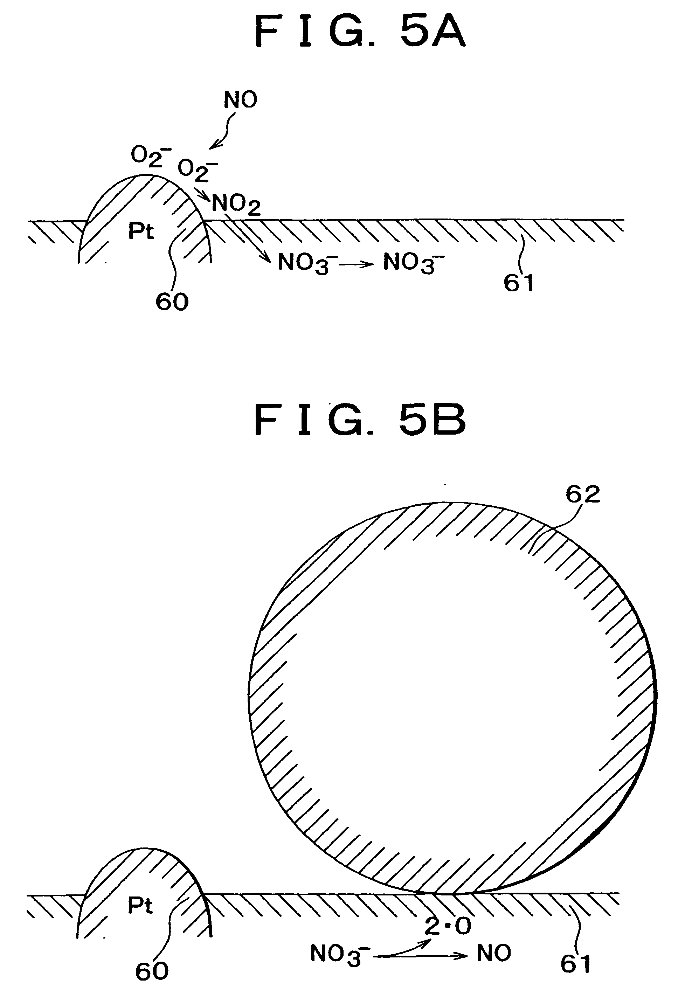

Figs. 5A and 5B are enlarged views showing the surface of the support layer formed on the inner peripheral surface of the exhaust passage 50, and the surface of the support layer formed on the inner wall surface of a pore formed in the partition 54, respectively. Figs. 5A and 5B illustrate a particle 60 of platinum (Pt) and the activated oxygen releasing/NOx absorbing agent 61 containing potassium K.

When the exhaust gas containing an excessive amount of oxygen flows into the exhaust passage 50 of the filter 4, the oxygen O₂ deposits in the form of O₂ or O²⁻ on the surface of platinum Pt as shown in Fig. 5A. Then, O₂⁻ or O²⁻ on the surface of the platinum reacts with NO contained in the exhaust gas to form NO₂ (as represented by: 2NO + O₂ → 2NO₂). A portion of the NO₂ thus produced is further oxidized on the platinum Pt, and is absorbed into the agent 61 to combine with potassium (K). As a result, it is diffused in the agent 61 as shown in Fig. 5A, in the form of a nitrate ion NO₃⁻, a portion of which forms potassium nitrate KNO₃.

The exhaust gas also contains SO₂ as described above, which is absorbed into the agent 61 in the same manner as in the case of NO. That is, oxygen O₂ deposits in the form of O₂⁻ or O²⁻ on the surface of platinum Pt, on which SO₂ reacts with O₂⁻ or O²⁻ to form SO₃.

A portion of the SO₃ thus produced is further oxidized on the surface of the platinum Pt and is absorbed into the agent 61 to combine with potassium K. It is diffused in the agent 61 in the form of sulfate ion SO₄²⁻ to form potassium sulfate K₂SO₄. As a result, potassium nitrate KNO₃ and potassium sulfate K₂SO₄ are produced in the agent 61.

Meanwhile, particulates mainly formed of carbon (C) are produced in the combustion chamber, which will be contained in the resultant exhaust gas. When the exhaust gas containing carbon flows through the exhaust passage 50 of the filter 4, or flows from the exhaust passage 50 to the exhaust passage 51, the particulates are brought into contact with the surface of the support layer, for example, the surface of the agent 61, and deposit thereon as shown in Fig. 5B.

Deposition of the particulates on the surface of the agent 61 decreases the oxygen concentration on the contact surface between the particulates 62 and the agent 61. As the oxygen concentration is lowered, a difference arises in the oxygen concentration between the inside of the agent 61 having a relatively high oxygen concentration and the contact surface, and oxygen contained in the agent 61 is likely to move toward the contact surface where the oxygen concentration is low. As a result, potassium nitrate KNO₃ produced and stored in the agent 61 is decomposed into pottasium K, oxygen O, and nitric oxide NO. The oxygen O moves toward the contact surface between the particulates 62 and the agent 61, and the nitric oxide NO is released from the agent 61 to the atmosphere. The nitric oxide NO thus released is oxidized on the platinum Pt at a downstream side and is absorbed in the agent 61 again.

Meanwhile, the potassium sulfate K₂SO₄ produced and stored in the agent 61 is decomposed into potassium K, oxygen O, and SO₂. The oxygen moves toward the contact surface between the particulates 62 and the agent 61. The SO₂ is released from the agent 61 to the atmosphere, and the released SO₂ is then oxidized on the surface of the platinum at a downstream side and is absorbed in the agent 61 again.

The oxygen that moves toward the contact surface between the particulates 62 and the agent 61 is generated by decomposing a compound such as potassium nitrate KNO₃ and potassium sulfate K₂SO₄. Such oxygen generated by decomposing the compound exhibits high energy, and has a significantly high activating capability. As a result, such oxygen that moves toward the contact surface between the agent 61 and the particulates 62 provides activated oxygen. Being brought into contact with the activated oxygen, the particulates 62 are oxidized in a short period of time without producing luminous flame, and are removed completely. Therefore, no particulates 62 deposit on the filter 4.

Conventionally, when the particulates deposited in laminated form on the filter 4 are burned, the filter 4 glows and the particulates burn with flame. In order to maintain such burning with flame, it is necessary to keep the filter 4 at a high temperature.

On the other hand, according to the invention, the particulates 62 are oxidized without generating luminous flame, and the surface of the filter 4 does not glow. More specifically, in the invention, the particulates 62 can be oxidized and removed at a relatively low temperature compared with the case of the conventional system. Thus, the manner of oxidizing and removing the particulates 62 without generating the of for removing the particulates with flame in the conventional system.

As the particulates are oxidized and removed at a relatively low temperature, resulting in a gentle (mild) increase in the temperature of the filter 4, there is substantially no risk of damaging the filter 4. As no particulates deposit on the filter 4, there is almost no possibility of coagulation of ash produced by burning the particulates. So the filter 4 is unlikely to be clogged.

The clogging of the filter 4 is caused mainly by calcium sulfate CaSO₄. The fuel or lubricant contains calcium Ca, and accordingly, is contained in the exhaust gas. The calcium Ca produces calcium sulfate CaSO₄ in the presence of SO₃. The thus produced CaSO₄ is solid and is not decomposed even at a high temperature. Therefore, the pores of the filter 4 are clogged with the resultant calcium sulfate CaSO₄.

In the above case, if any of alkali metals or alkali earth metals, for example, potassium (K), exhibiting higher ionization tendency than that of calcium Ca is used as the agent 61, SO₃ that diffuses into the agent 61 is combined with the potassium (K) to form the potassium sulfate K₂SO₄. The calcium (Ca), which is not combined with SO₃, passes through the partition 54 of the filter 4 to enter the exhaust passage 51. Accordingly, there is no clogging of pores of the filter 4. It is, thus, preferable to use the agent 61 in the form of, for example, a metal selected from alkali metals or alkali earth metals, such as potassium (K), lithium (Li), cesium (Cs), and barium (Ba), exhibiting higher ionization tendency than calcium Ca.

The agent 61 and platinum (Pt) are further activated as the temperature of the filter 4 becomes higher. Accordingly the amount of the activated oxygen O that can be released from the agent 61 per unit time may increase as the temperature of the filter 4 becomes higher. Consequently, the amount of particulates that can be oxidized and removed per unit time on the filter 4 without generating the luminous flame may increase as the temperature of the filter 4 becomes higher.

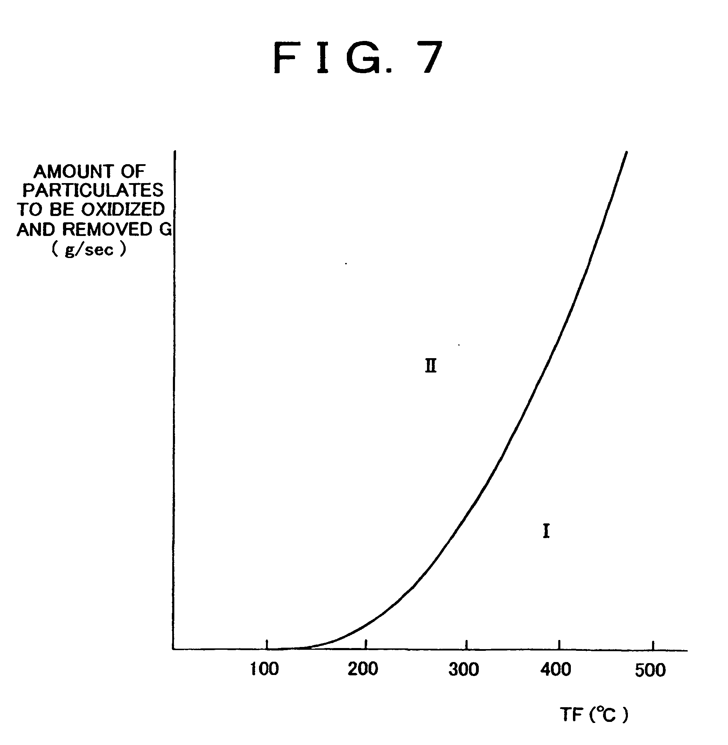

Referring to the graph of Fig. 7, a solid curved line indicates an amount G of particulates that can be oxidized and removed without generating luminous flame per unit time. In the graph of Fig. 7, a horizontal axis represents a temperature TF of the filter 4. When the amount "M" of particulates released from the combustion chamber per unit time is less than the amount "G" as in area "I" in Fig. 7, all particulates discharged from the combustion chamber are brought into contact with the filter 4 and are immediately oxidized thereon without generating the luminous flame.

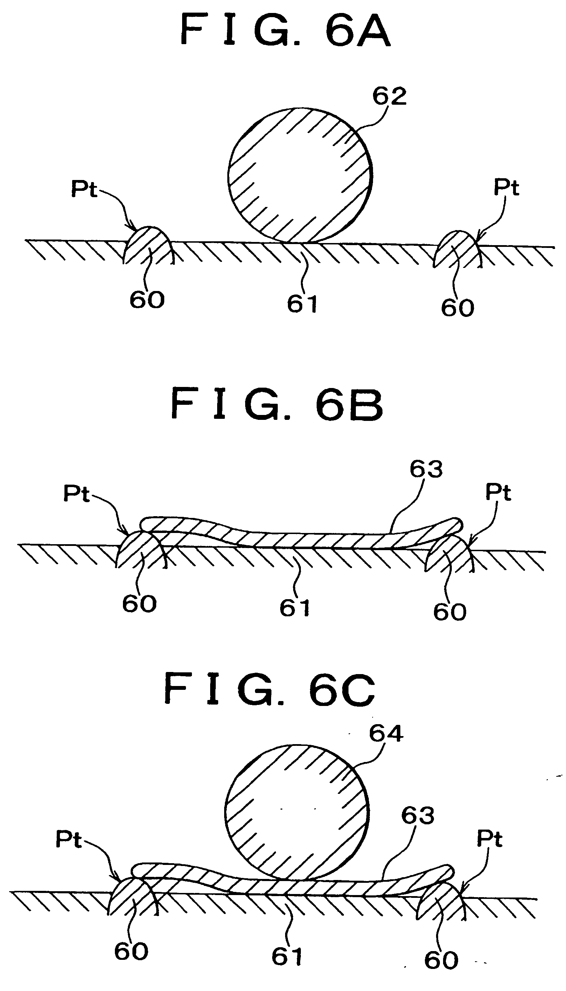

On the other hand, when the amount M is more than the amount G as in the area II in Fig. 7, the activated oxygen amount is too small to oxidize all particulates. Figs. 6A to 6C illustrate how a particulate is oxidized when the amount of activated oxygen is insufficient.

Referring to Fig. 6A, when the particulate 62 deposits on the agent 61 in the presence of insufficient activated oxygen, only a part of the particulate 62 is oxidized. The rest of the particulate which has not been sufficiently oxidized remains on the support layer. If the activated oxygen continues to be insufficient, portions of multiple particulates that have not been oxidized will remain and successively accumulate on the support layer. As a result, the surface of the support layer is covered with the residual particulate portion 63 as shown in Fig. 6B.

The residual particulate (portion) 63 that covers the surface of the support layer is gradually converted into a type of carbon that is unlikely to be oxidized, and thus becomes likely to remain (on the support layer). When the support layer surface is covered with the residual particulates 63, the effect of platinum (Pt) for oxidizing NO, SO₂ and the effect of the agent 61 for releasing the activated oxygen are restricted or reduced. As a result, as shown in Fig. 6C, newly deposited particulates are accumulated and layered one after another. The particulates thus accumulated and layered cannot be oxidized by the activated oxygen since they are not brought into contact with the agent 61 owing to the residual particulates 63. Therefore, if the amount M continues to be more than the amount G, more particulates are accumulated and layered on the filter 4.

In the area I of the graph shown in Fig. 7, particulates can be oxidized on the filter 4 without generating luminous flame within a short period of time. In the area II of the graph shown in Fig. 7, on the other hand, the particulates are accumulated and layered on the filter 4. In order to prevent accumulation of the particulates on the filter 4, it is preferable to control the amount M to be less than the amount G, that is, to control the amount G in the area I.

Actually, however, it is almost impossible to control the amount M to be less than the amount G in all operating states of the engine. For example, upon a start of the engine, the filter 4 is usually placed at a low temperature, and therefore the amount M is larger than the amount G. When the amount M becomes larger than the amount G immediately after the engine start, portions of particulates that were not oxidized starts accumulating on the filter 4.

As described above, the amount M is increased to be larger than the amount G depending on the operating state of the engine. The remaining particulates are accumulated and layered on the filter 4.

The accumulated particulates on the filter 4 can be oxidized without generating the luminous flame by controlling the air/fuel ratio of a part or the whole of the exhaust gas to fuel-rich temporarily. When the exhaust air/fuel ratio is controlled to fuel-rich, that is, when the oxygen concentration of the exhaust gas is lowered, the activated oxygen O is released to the atmosphere from the agent 61. The thus released activated oxygen O may oxidize and remove the accumulated particles without generating the luminous flame within a short period of time.

The mechanism for removing the particulates using the activated oxygen releasing function of the agent 61 has been discussed above.

### <NOx removal treatment employing activated oxygen releasing/NOx absorbing agent ··· function of absorbing and releasing NOx >

Next, the mechanism for removing the NOx with the NOx absorbing function of the agent 61 will be discussed. The NOx absorbing function may be obtained in the same mechanism by using other alkali metals, alkali earth metals, and rare earth metals as the NOx absorbing agent.

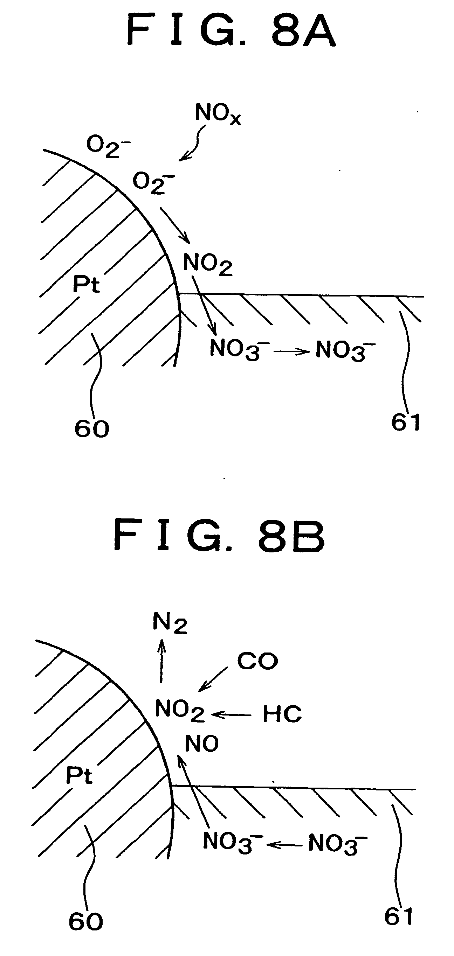

It is assumed that the NOx removing operation is performed by the activated oxygen releasing/NOx absorbing agent in the manner as shown in Figs. 8A and 8B. These figures show a particle of platinum (Pt) 60 and the activated oxygen releasing/NOx absorbing agent 61 containing potassium (K).

When the exhaust gas entering into the exhaust passage becomes significantly fuel-lean, the oxygen concentration of the exhaust gas is largely increased. As a result, oxygen O₂ deposits in the form of O₂⁻ or O²⁻ on the surface of platinum (Pt), as shown in Fig. 8A. Then NO contained in the entering exhaust gas reacts with O₂⁻ or O²⁻ on the surface of platinum Pt to form NO₂ (as represented by : 2NO + O₂ → 2NO₂).

Then the thus formed NO₂ is oxidized on the platinum (Pt) and absorbed in the agent 61. The absorbed NO₂ is combined with potassium (K), and is diffused into the agent 61 in the form of nitrate ion NO₃⁻ as shown in Fig. 8A. In this manner, the NOx is absorbed in the agent 61.

The NO₂ is produced on the surface of platinum (Pt) so long as the oxygen concentration contained in the entering exhaust gas is high. Then the NO₂ is absorbed in the agent 61 to produce the nitrate ion NO₃⁻ until the NOx absorbing ability is saturated.

Meanwhile, when the exhaust air/fuel ratio becomes stoichiometric value or fuel-rich, the oxygen concentration of the entered exhaust gas is decreased. Since the production amount of NO₂ is decreased, the reaction proceeds reversely (as represented by NO₃⁻ → NO₂). As a result, the nitrate ion NO₃⁻ present in the agent 61 is released therefrom in the form of NO₂ or NO. When the oxygen concentration of the entered exhaust gas is decreased, the NOx is released from the activated oxygen releasing/NOx absorbing agent 61.

In the above case, HC and CO contained in the exhaust gas react with O₂⁻ or O²⁻ and are oxidized. Upon the decrease in the oxygen concentration of the entering exhaust gas, the agent 61 releases NO₂ or NO, which reacts with unburned HC and CO and is reduced into N₂, as shown in Fig. 8B.

More specifically, HC and CO contained in the exhaust gas immediately react with oxygen O₂⁻ or O²⁻ on platinum (Pt), and are oxidized. If HC and CO still remain on the platinum (Pt) even after the oxygen O₂⁻ or O²⁻ is consumed, the remaining HC and CO serve to reduce NOx that has been released from the agent 61 and NOx emitted from the internal combustion engine into N₂.

When NO₂ or NO no longer exists on the surface of the platinum (Pt), the agent 61 releases NO₂ or NO continuously to be reduced to N₂. When the exhaust air/fuel ratio is controlled to a stoichimetric value or fuel-rich, the agent 61 releases NOx to be reduced to N₂ within a short period of time.

When the exhaust air/fuel ratio becomes fuel-lean, NOx is absorbed in the agent 61 as described above. When the exhaust air/fuel ratio is controlled to a stoichiometric value or fuel-rich, the agent 61 releases NOx to be reduced to N₂ within a short period of time. As a result, releasing of NOx to the atmosphere can be prevented.

In the normal operating state of the diesel engine, fuel combustion is performed with an air/fuel ratio that is far leaner than the stoichiometric value (A/F = 14.6). Accordingly, the resultant exhaust gas entering the filter, that is, the activated oxygen releasing/NOx absorbing agent 61, has a higher air/fuel ratio or becomes fuel-lean. The NOx contained in the exhaust gas is, thus, absorbed by the agent 61 and substantially no NOx is released therefrom.

In the diesel engine, a reducing agent is delivered to the exhaust gas to decrease the oxygen concentration thereof at a predetermined timing before NOx absorbing ability of the agent 61 is saturated, such that the NOx absorbed by the agent 61 is released and reduced into N₂.

According to this embodiment, ECU 11 estimates the amount of NOx absorbed in the agent 61 based on the previous data of the operating state of the internal combustion engine. When the estimated amount of the absorbed NOx reaches a predetermined value, the ECU 11 controls the exhaust air/fuel ratio to the rich side temporarily such that the oxygen concentration is decreased, and supplies the reducing agent to the exhaust gas. The operation for temporarily controlling the air/fuel ratio to the rich side in this way is generally referred to as "rich spike".

In this embodiment, the rich spike is performed by delivering the fuel into the exhaust passage upstream of the filter 4.

The rich spike is performed at a predetermined timing before the NOx absorbing ability of the agent 61 is saturated such that NOx contained in the exhaust gas can be continuously removed and prevented from being released to the atmosphere.

The NOx removal mechanism using the NOx absorbing function of the agent 61 has been described above.

In the case where the agent 61 is employed, if the air/fuel ratio of the exhaust gas entering into the filter 4 is fuel-lean, the agent 61 serves to absorb NOx. When particulates contained in the exhaust gas deposit on the agent 61, they can be oxidized and removed by the activated oxygen released from the agent 61 within a short period of time. In this manner, releasing of both particulates and NOx contained in the exhaust gas to the atmosphere can be prevented.

Meanwhile, if the air/fuel ratio of the exhaust gas entering into the filter 4 becomes fuel-rich, NOx is released from the agent 61. The released NOx is reduced by unburned HC, CO. This makes it possible to prevent releasing of NOx to the atmosphere. If the particulates accumulate on the filter 4 at this time, they are oxidized and removed by the activated oxygen released from the agent 61.

The exhaust gas emitted from the engine by combustion of the fuel also contains sulfur oxides such as SO₂ or SO₃ (hereinafter referred to as "SOx" where appropriate), since the fuel includes a sulfur component. The NOx catalyst absorbs SOx contained in the exhaust gas in the same mechanism by which the NOx is absorbed. Thus, the NOx catalyst disposed in the exhaust passage of the internal combustion engine serves to absorb both NOx and SOx.

The SOx absorbed in the NOx catalyst tends to form a stable sulfate as time elapses. Therefore it is difficult to decompose and release the absorbed SOx under the same condition in which the NOx is released from the NOx catalyst and reduced. Accordingly, SOx is likely to be accumulated in the NOx catalyst rather than being released. As the amount of accumulated SOx in the NOx catalyst is increased, the NOx absorbing ability of the NOx catalyst decreases, and the NOx in the exhaust gas cannot be sufficiently removed. As a result, NOx removal efficiency is decreased. This phenomenon is called "S-poisoning". In order to keep the NOx removing ability high for an prolonged period of time, the SOx absorbed by the NOx catalyst has to be released at an appropriate timing so as to recover the NOx catalyst from S-poisoning.

The S-poisoning recovery process for the NOx catalyst is performed by heating the NOx catalyst to a predetermined temperature (for example, 600-650°C) that is higher than that at which the NOx is released and reduced, and controlling the exhaust air/fuel ratio to a stoichiometric value or fuel-rich. As a result, sulfate absorbed in the NOx catalyst is decomposed into SO₃, which is then reduced into SO₂ by unburned HC, CO contained in the exhaust gas. The resulting SO₂ is then released to the atmosphere.

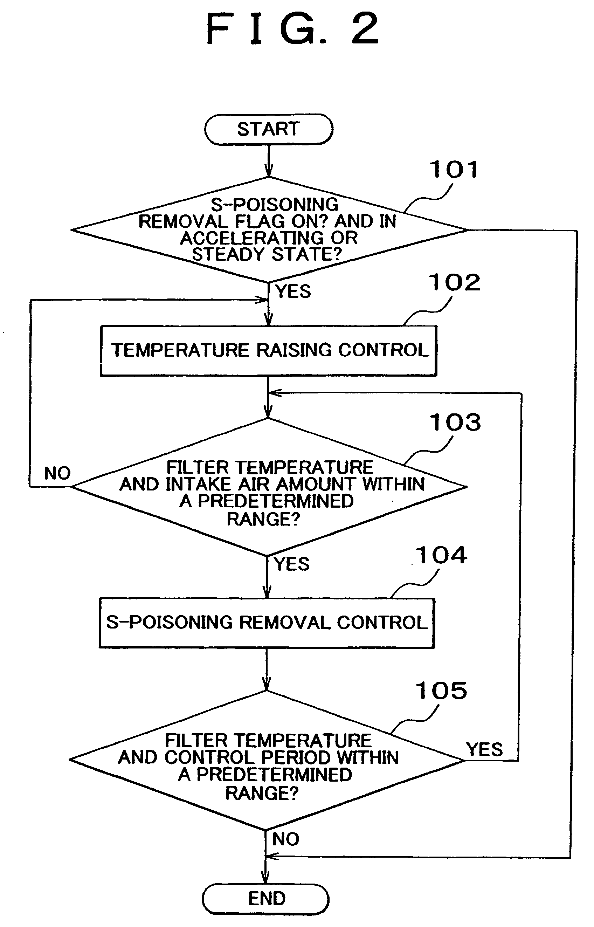

Next, the control routine for adding fuel according to the embodiment will be described referring to the flowchart shown in Fig. 2.

### <step 101> It is determined whether S-poisoning recovery control is started.

The amount of SOx absorbed by the NOx absorbing agent per unit time is calculated from numerical data map preliminarily stored in the ROM of the ECU 11 based on the load of the engine 1 (as represented by a signal from the accelerator position sensor 18) and the engine speed (as represented by pulses generated by the crank angle sensor 15). It is then determined if the calculated value of the absorbed SOx amount is equal to or greater than a predetemrined value. It is further determined whether the vehicle is in an accelerating state or steady state based on a change rate of the engine speed of the engine 1 obtained from the crank angle sensor 15. If the calculated value of the absorbed SOx amount is equal to or greater than the predetermined value, the process proceeds to step 102. If it is less than the predetermined value, this control routine is terminated.

If it is determined that the vehicle is in an accelerating state or steady state, the process proceeds to step 102. If the vehicle is in a state other than the accelerating and steady states, that is, if the vehicle is in a decelerating or in an idling state, the control routine is terminated.

### <step 102> Step 101 is followed by step 102. If it is determined that S-poisoning recovery control is started, the control for increasing temperature of a filter 4 is started.

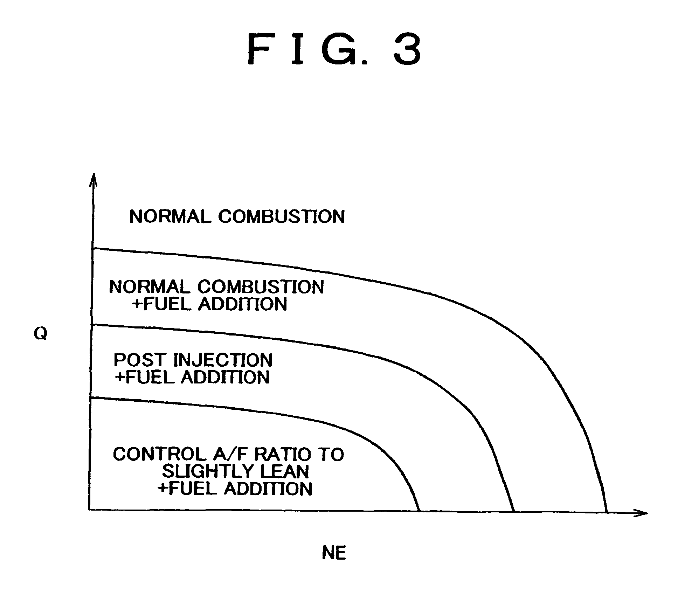

In step 102, an appropriate temperature-raising mode is selected in accordance with, for example, the temperature-raising control map as shown in Fig. 3, based on the current operating state of the engine. The operating state of the engine is determined in accordance with the fuel injection amount Q and engine speed NE derived from a signal generated by the accelerator position sensor 18 and pulses generated by the crank angle sensor 15.

### 1: Low load

When the engine operates under a low load, the amount of the fuel injected to cylinders of the engine 1 is increased so as to decrease the air/fuel ratio from lean (for example, A/F≥20) to slightly lean (for example, A/F=16-18), and the fuel is added to the exhaust passage 3. In a low load condition of the engine 1, only a small amount of soot is generated even if a slightly lean air/fuel mixture is burned in each cylinder of the engine. When the engine 1 is operated in this state, the fuel combustion amount is increased, resulting in an increase in the exhaust temperature and a increase in the temperature of the filter 4. When the fuel is added into the exhaust passage 3 at the same time, the fuel is oxidized by the filter 4, which is heated. As a result, the catalyst is further heated.

### 2: Intermediate load

When the engine operates under an intermediate load, a main fuel injection is performed by injecting the fuel into each cylinder of the engine 1 for combustion, additional fuel is injected during an expansion stroke (hereinafter referred to as post injection), and fuel is also added to the exhaust passage 3. When the air/fuel ratio is decreased only through the main fuel injection, problems of, for example, soot generation may occur. In addition, the fuel that is increased for reducing the air/fuel ratio results in an increase in the engine output and causes torque fluctuation, thus deteriorating the operating state of the engine. Injection of the fuel affects the engine output and causes torque fluctuation, thus deteriorating the operating state of the engine. So the post injection is performed after injection of the fuel into cylinders during, for example, the expansion stroke in which the injected fuel is unlikely to affect the engine output. The thus post-injected fuel is burned to increase the exhaust gas temperature. Additionally the fuel is delivered to the exhaust passage 5, and is then oxidized by the filter 4. As a result, the temperature of the filter 4 is increased.

### 3: High load

When the engine operates under a high load, the fuel is added to the exhaust passage 5. In the high load condition of the engine, a large amount of the fuel is combusted in cylinders and accordingly, the exhaust gas temperature is high. Therefore, the temperature of the filter 4 may be sufficiently increased only by adding the fuel into the exhaust passage 5 and oxidizing it at the filter 4.

In the aforementioned low-load, intermediate-load and high-load conditions of the engine, a sufficient amount of oxygen is required to burn the fuel delivered to the exhaust passage 3 at the catalyst. Therefore, it is preferable to set the air/fuel ratio of the exhaust gas flowing through the catalyst after adding the fuel into the exhaust passage 3 to be on the leaner side of the stoichiometric value.

### 4: High engine speed and high load

When the engine operates under high engine speed and high load, normal combustion is performed in the engine. In this condition, the fuel is normally combusted. In this high-speed high-load condition, the amount of the fuel burned in the cylinders is even larger than that in the high load condition as indicated above. Therefore, the temperature of the filter 4 can be increased only by normal fuel combustion. If the fuel is additionally fed to the filter 4 in this condition, the temperature of the filter 4 may be excessively increased and cause thermal deterioration of the catalyst.

### <step 103> In step 103, it is determined whether conditions for starting S-poisoning recovery control are met.

More specifically, it is determined whether the temperature of the heated catalyst is within a predetermined temperature range (for example, 550 to 700°C) suited for performing S-poisoning recovery process, and whether the intake air amount is equal to or smaller than a predetermined value.

If it is determined that the temperature of the filter 4 is not within the predetermined range, S-poisoning recovery control is not performed. The process then returns to step 102. When the intake air amount is larger than the predetermined value, the process returns to step 102. No S-poisoning recovery control is performed until the intake air amount becomes equal to or smaller than the predetermined value.

### <step 104> When conditions for starting the S-poisoning recovery control are met, step 104 is executed to start the S-poisoning recovery control.

In a normal operating state of a diesel engine, combustion of a fuel-rich air/fuel mixture in the engine may deteriorate fuel efficiency and cause smoke or misfire, resulting in deteriorated operating state of the engine. When the fuel is injected during deceleration, the injected fuel is burned and converted into the engine output, and the vehicle operator may feel uncomfortable during the deceleration.

There is also a known technique to control the air/fuel ratio to be in the vicinity of the stoichiometric value by reducing the intake air amount with an electronic controlled throttle valve. As a step of control of a motor for driving (opening and closing) the throttle valve is relatively large, it is difficult to perform fine control of the opening amount of the throttle valve. When an attempt to burn an air-fuel mixture of around the stoichiometric air/fuel ratio with a reduced quantity of new air, the actual quantity of the new air may largely vary within the throttle opening control range of the motor, and the resultant air/fuel ratio may deviate from the stoichiometric value. Thus, it is difficult to operate the engine at around the stoichiometric air/fuel ratio.

Then the air/fuel ratio in the cylinder of the engine 1 is decreased to be slightly lean (for example, A/F = 16 to 18) such that the air/fuel ratio in the cylinder is kept fuel-lean irrespective of the fluctuation of the air/fuel ratio owing to the throttle valve 17. In addition, the fuel is injected from the fuel injection valve 8 so as to control the exhaust air/fuel ratio to fuel-rich. In this manner, S-poisoning recovery control is performed.

By measuring the exhaust air/fuel ratio with the air/fuel ratio sensor 16 disposed in the exhaust passage 5, the amount of the fuel injected by the fuel injection valve 8 is feedback-controlled so that the exhaust air/fuel ratio becomes fuel-lean. As a result, accurate S-poisoning control can be performed.

### <step 105> It is determined whether the temperature of the filter 4 is in a predetermined temperature range (for example, 600 to 700°C), and whether the time during which the S-poisoning recovery control has been performed is shorter than a predetermined value.

If the aforementioned conditions are met, that is, the S-poisoning recovery control time is shorter than the predetermined time, the process returns to step 103 for continuing S-poisoning recovery.

Meanwhile, if the temperature of the filter 4 is not within the predetermined temperature range, and is increased excessively, the filter 4 may suffer from thermal deterioration. In this case, the control routine is terminated. When the temperature is lowered, the S-poisoning cannot be recovered. In this case, the control routine is terminated. When the temperature becomes lower than the predetermined temperature range, the S-poisoning cannot be removed. In this case, too, the control routine is terminated.

If the S-poisoning recovery control is performed for the predetermined time or longer (the predetermined time elapses), it is determined that the recovery from S-poisoning has been accomplished, and the control routine is terminated.

In accordance with the emission control system for an internal combustion engine of the invention, a temperature-raising mode that suits the engine operating state is selected from a plurality of temperature-raising modes such that the temperature of the catalyst may be increased at an earlier stage.

An emission control system for an internal combustion engine (1) is provided with a catalyst (4) disposed in an exhaust passage (3) of the internal combustion engine (1) for purifying an exhaust gas that enters the catalyst (4); engine operating state detecting means (15) for detecting an engine operating state of the internal combustion engine (1); catalyst temperature raising means capable of raising a temperature of the catalyst (4) in a plurality of modes; and selecting means (11) for selecting one mode from the plurality of modes based on a value detected by the engine operating state detecting means such that the catalyst temperature is raised. When the internal combustion engine is in a low load state, the catalyst temperature raising means raises the temperature of the catalyst in a first mode selected from the plurality of modes, by increasing an amount of a main fuel injected into the internal combustion engine (1) so as to make an air/fuel ratio closer to a stoichiometric value, and by adding a fuel into the exhaust passage (3). When the internal combustion engine is in an intermediate load state, the catalyst temperature raising means raises the temperature of the catalyst in a second mode selected from the plurality of modes, by injecting an additional fuel after injecting the main fuel into the internal combustion engine (1), and by adding the fuel into the exhaust passage (3). When the internal combustion engine is in a high load state, the catalyst temperature raising means raises the catalyst temperature in a third mode selected from the plurality of modes, by adding the fuel into the exhaust passage (3).

## Claims

1. An emission control system for an internal combustion engine (1), comprising:
a catalyst (4) disposed in an exhaust passage (3) of the internal combustion engine (1) for purifying an exhaust gas that enters the catalyst (4);
engine operating state detecting means (15) for detecting an engine operating state of the internal combustion engine (1);
catalyst temperature raising means capable of raising a temperature of the catalyst (4) in a plurality of modes; and
selecting means (11) for selecting one mode from the plurality of modes based on a value detected by the engine operating state detecting means such that the catalyst temperature is raised, wherein:
when the internal combustion engine is in a low load state, the catalyst temperature raising means raises the temperature of the catalyst in a first mode selected from the plurality of modes, by increasing an amount of a main fuel injected into the internal combustion engine (1) so as to make an air/fuel ratio closer to a stoichiometric value, and by adding a fuel into the exhaust passage (3);
when the internal combustion engine is in an intermediate load state, the catalyst temperature raising means raises the temperature of the catalyst in a second mode selected from the plurality of modes, by injecting an additional fuel after injecting the main fuel into the internal combustion engine (1), and by adding the fuel into the exhaust passage (3); and
when the internal combustion engine is in a high load state, the catalyst temperature raising means raises the catalyst temperature in a third mode selected from the plurality of modes, by adding the fuel into the exhaust passage (3).

2. An emission control system for an internal combustion engine (1) according to claim 1, wherein the catalyst temperature raising means is actuated when the catalyst temperature is to be increased to recover the catalyst from S-poisoning, and the engine operating state is in an accelerating state or a steady state.

3. An emission control system for an internal combustion engine (1) according to claim 1 or claim 2, further comprising S-poisoning removing means for removing S poisoning such that an amount of a new air admitted into the internal combustion engine (1) is reduced to make an air/fuel ratio closer to a stoichiometric value, and a fuel is added to the exhaust passage (3) to make the air/fuel ratio of an exhaust gas flowing through the catalyst (4) to be rich.

4. An emission control system according to any one of claims 1 to 3, wherein when the internal combustion engine is in high engine speed and high load state, the catalyst temperature raising means raises the temperature of the catalyst in a fourth mode selected from the plurality of modes by normally burning the main fuel injected into the internal combustion engine (1).

5. An emission control system according to any one of claims 1 to 4, wherein the additional fuel is injected into the exhaust passage (3) during an expansion stroke.

6. An emission control system according to any one of claim 1 to 5, wherein the catalyst (4) is carried on a particulate filter.

7. A method for controlling an emission control system for an internal combustion engine (1), the emission control system including a catalyst (4) disposed in an exhaust passage (3) of the internal combustion engine (1) for purifying an exhaust gas that enters the catalyst (4), comprising the steps of:
detecting an engine operating state of the internal combustion engine (1);
raising a temperature of the catalyst in a mode that is selected from a plurality of modes based on the engine operating state; wherein
when the internal combustion engine is in a low load state, the catalyst temperature is raised in a first mode selected from the plurality of modes by increasing an amount of a main fuel injected into the internal combustion engine (1) so as to make an air/fuel ratio closer to a stoichiometric value, and by delivering a fuel into the exhaust passage (3).
when the internal combustion engine is in an intermediate load state, the catalyst temperature is raised in a second mode selected from the plurality of modes, by injecting an additional fuel after injecting the main fuel into the internal combustion engine (1), and by adding the fuel into the exhaust passage (3); and
when the internal combustion engine is in a high load state, the catalyst temperature is raised in a third mode selected from the plurality of modes, by adding the fuel into the exhaust passage (3).

8. A method according to claim 7, wherein the step of raising the temperature of the catalyst is executed when the catalyst temperature of the catalyst (4) is to be increased to recover the catalyst from S-poisoning, and the engine operating state is in an accelerating state or a steady state.

9. A method according to claim 7 or claim 8, further comprising a step of removing S-poisoning for removing S poisoning such that an amount of a new air admitted into the internal combustion engine (1) is reduced to make an air/fuel ratio closer to a stoichiometric value, and a fuel is added to the exhaust passage (3) to make the air/fuel ratio of an exhaust gas flowing through the catalyst (4) to be rich.

10. A method according to any one of claims 7 to 9, wherein when the internal combustion engine is in high engine speed and high load state, the catalyst temperature is raised by normally burning the main fuel injected into the internal combustion engine (1).

11. A method according to any one of claims 7 to 10, wherein the additional fuel is injected into the exhaust passage (3) during an expansion stroke.

12. A method according to any one of claims 7 to 11, wherein the catalyst (4) is carried on a particulate filter.

## Patentansprüche

1. Brennkraftmaschine mit innerer Verbrennung (1), welche aufweist:
einen Katalysator (4), welcher im Abgaskanal 3 der Maschine angeordnet ist und zum Reinigen des in diesen strömenden Abgases dient,
eine Vorrichtung (5) zum Erfassen des Betriebszustandes der Brennkraftmaschine mit innerer Verbrennung (1),
eine Vorrichtung zum Erhöhen der Temperatur des Katalysators (4) nach verschiedenen Modi und
eine Vorrichtung (11) zum Auswählen eines Modus aus den zahlreichen Modi zur Temperaturerhöhung des Katalysators auf der Grundlage des von der Vorrichtung (5) erfaßten Betriebszustandes der Maschine, wobei
in dem Fall, daß die Brennkraftmaschine mit innerer Verbrennung (1) im Schwachlastbereich arbeitet, die Temperaturerhöhungsvorrichtung nach einem ausgewählten ersten Modus durch Einspritzen einer größeren Brennstoffmenge im Haupteinspritzvorgang zwecks Einstellens eines annähernd stöchiometrischen Luft/Brennstoff-Verhältnisses und durch Einspritzen von Brennstoff in den Abgaskanal (3) die Katalysatortemperatur erhöht,
in dem Fall, daß die Brennkraftmaschine mit innerer Verbrennung (1) im mittleren Lastbereich arbeitet, die Temperaturerhöhungsvorrichtung nach einem ausgewählten zweiten Modus durch zusätzliches Einspritzen von Brennstoff nach dem Haupteinspritzvorgang und Einspritzen von Brennstoff in den Abgaskanal (3) die Katalysatortemperatur erhöht, und
in dem Fall, daß die Brennkraftmaschine mit innerer Verbrennung (1) im Starklastbereich arbeitet, die Temperaturerhöhungsvorrichtung nach einem ausgewählten dritten Modus durch Einspritzen von Brennstoff in den Abgaskanal (3) die Katalysatortemperatur erhöht.

2. Abgasemissionssteuerungssystem für eine Brennkraftmaschine mit innerer Verbrennung (1) gemäß Anspruch 1, wobei die Temperaturerhöhungsvorrichtung zur Durchführung der Temperaturerhöhung des Katalysators aktiviert wird, wenn dieser der S-Entgiftung unterzogen werden soll und die Maschine sich im Beschleunigungszustand oder in einem Beharrungszustand befindet.

3. Abgasemissionssteuerungssystem für eine Brennkraftmaschine mit innerer Verbrennung (1) gemäß Anspruch 1 oder 2, welches außerdem eine Vorrichtung zur Durchführung der S-Entgiftung aufweist, wobei von dieser das S-Entgiften durch Verringern der Luftansaugmenge zwecks Einstellens eines annähernd stöchiometrischen Luft/Brennstoff-Verhältnisses und durch Einspritzen von Brennstoff in den Abgaskanal (3) zwecks Einstellens eines fetten Luft/Brennstoffverhältnisses des durch den Katalysator (4) strömenden Abgases durchgeführt wird.

4. Abgasemissionssteuerungssystem gemäß einem der Ansprüche 1 bis 3, wobei in dem Fall, daß die Brennkraftmaschine mit innerer Verbrennung im Starklastbereich und im Hochdrehzahlbereich arbeitet, die Temperaturerhöhungsvorrichtung nach einem ausgewählten vierten Modus durch normales Verbrennen des im Haupteinspritzvorgang in die Maschine gespritzten Brennstoffs die Katalysatortemperatur erhöht.

5. Abgasemissionssteuerungssystem gemäß einem der Ansprüche 1 bis 4, wobei das Einspritzen von Brennstoff in den Abgaskanal (3) während des Expansionshubs erfolgt.

6. Abgasemissionssteuerungssystem gemäß einem der Ansprüche 1 bis 5, wobei der Katalysator (4) von einem Partikelfilter getragen wird.

7. Verfahren zum Steuern der Abgasemission einer Brennkraftmaschine mit innerer Verbrennung (1), wobei zum Abgasemissionssteuerungssystem ein im Abgaskanal (3) der Brennkraftmaschine (1) angeordneter Katalysator (4) zum Reinigen des in diesen strömenden Abgases gehört und der Steuervorgang folgende Schritte aufweist:
Erfassen des Betriebszustandes einer Brennkraftmaschine mit innerer Verbrennung (1),
Erhöhen der Katalysatortemperatur nach einem auf der Grundlage des Betriebszustandes der Maschine ausgewählten Modus, wobei
in dem Fall, daß die Brennkraftmaschine mit innerer Verbrennung (1) im Schwachlastbereich arbeitet, die Temperaturerhöhungsvorrichtung nach einem ausgewählten ersten Modus durch Einspritzen einer größeren Brennstoffmenge im Haupteinspritzvorgang zwecks Einstellens eines annähernd stöchiometrischen Luft/Brennstoff-Verhältnisses und durch Einspritzen von Brennstoff in den Abgaskanal (3) die Katalysatortemperatur erhöht,
in dem Fall, daß die Brennkraftmaschine mit innerer Verbrennung (1) im mittleren Lastbereich arbeitet, die Temperaturerhöhungsvorrichtung nach einem ausgewählten zweiten Modus durch zusätzliches Einspritzen von Brennstoff nach dem Haupteinspritzvorgang und Einspritzen von Brennstoff in den Abgaskanal (3) die Katalysatortemperatur erhöht, und
in dem Fall, daß die Brennkraftmaschine mit innerer Verbrennung (1) im Starklastbereich arbeitet, die Temperaturerhöhungsvorrichtung nach einem ausgewählten dritten Modus durch Einspritzen von Brennstoff in den Abgaskanal (3) die Katalysatortemperatur erhöht.

8. Verfahren gemäß Anspruch 7, wobei der Schritt zur Temperaturerhöhung des Katalysators durchgeführt wird, wenn dieser der S-Entgiftung unterzogen werden soll und die Maschine sich im Beschleunigungszustand oder in einem Beharrungszustand befindet.

9. Verfahren gemäß Anspruch 7 oder 8, welches außerdem einen Schritt zur Durchführung der S-Entgiftung aufweist, wobei das S-Entgiften durch Verringern der Luftansaugmenge zwecks Einstellens eines annähernd stöchiometrischen Luft/Brennstoff-Verhältnisses und durch Einspritzen von Brennstoff in den Abgaskanal (3) zwecks Einstellens eines fetten Luft/Brennstoffverhältnisses des durch den Katalysator (4) strömenden Abgases erfolgt.

10. Verfahren gemäß einem der Ansprüche 7 bis 9, wobei in dem Fall, daß die Brennkraftmaschine mit innerer Verbrennung (1) im Starklastbereich und im Hochdrehzahlbereich arbeitet, die Temperatur des Katalysators durch normales Verbrennen des im Haupteinspritzvorgang eingespritzten Brennstoffs erhöht wird.

11. Verfahren gemäß einem der Ansprüche 7 bis 10, wobei das Einspritzen von Brennstoff in den Abgaskanal (3) während des Expansionshubs erfolgt.

12. Verfahren gemäß einem der Annsprüche 7 bis 11, wobei der Katalysator (4) von einem Partikelfilter getragen wird.

## Revendications

1. Système de commande d'émissions pour un moteur à combustion interne (1), comprenant :
un catalyseur (4) disposé dans un passage d'échappement (3) du moteur à combustion interne (1) pour purifier les gaz d'échappement qui entrent dans le catalyseur (4) ;
un moyen de détection d'état de fonctionnement de moteur (15) destiné à détecter un état de fonctionnement de moteur du moteur à combustion interne (1) ;
un moyen d'élévation de température de catalyseur capable d'élever une température du catalyseur (4) dans une pluralité de modes ; et
un moyen de sélection (11) destiné à sélectionner un mode à partir de la pluralité de modes en se basant sur une valeur détectée par le moyen de détection d'état de fonctionnement du moteur d'une manière telle que la température de catalyseur est élevée, dans lequel :
lorsque le moteur à combustion interne se trouve dans un état de faible charge, le moyen d'élévation de température de catalyseur élève la température du catalyseur dans un premier mode sélectionné à partir de la pluralité de modes, en augmentant une quantité de carburant principal injecté dans le moteur à combustion interne (1) de façon à rendre un rapport air-carburant plus proche d'une valeur stoechiométrique, et en ajoutant un carburant dans le passage d'échappement (3) ;
lorsque le moteur à combustion interne se trouve dans un état de charge intermédiaire, le moyen d'élévation de température de catalyseur élève la température du catalyseur dans un deuxième mode sélectionné à partir de la pluralité de modes, en injectant un carburant supplémentaire après avoir injecté le carburant principal dans le moteur à combustion interne (1) et en ajoutant le carburant dans le passage d'échappement (3) ; et
lorsque le moteur à combustion interne se trouve dans un état de charge élevée, le moyen d'élévation de température de catalyseur élève la température du catalyseur dans un troisième mode sélectionné à partir de la pluralité de modes, en ajoutant le carburant dans le passage d'échappement (3).

2. Système de commande d'émissions pour un moteur à combustion interne (1) selon la revendication 1, dans lequel le moyen d'élévation de température de catalyseur est actionné lorsque la température du catalyseur doit être augmentée pour régénérer le catalyseur suite à l'empoisonnement au soufre, et lorsque l'état de fonctionnement du moteur se trouve dans un état d'accélération ou dans un état constant.

3. Système de commande d'émissions pour un moteur à combustion interne (1) selon la revendication 1 ou 2, comprenant de plus un moyen de suppression d'empoisonnement au soufre destiné à supprimer l'empoisonnement au soufre d'une manière telle qu'une quantité d'air nouveau admis dans le moteur à combustion interne (1) est réduite pour amener un rapport air-carburant plus proche d'une valeur stoechiométrique, et un carburant est ajouté dans le passage d'échappement (3) pour rendre le rapport air-carburant des gaz d'échappement circulant à travers le catalyseur (4) riche.

4. Système de commande d'émissions selon l'une quelconque des revendications 1 à 3, dans lequel lorsque le moteur à combustion interne se trouve dans un état de vitesse de moteur élevée et de charge élevée, le moyen d'élévation de température de catalyseur élève la température du catalyseur dans un quatrième mode sélectionné à partir de la pluralité de modes en brûlant normalement le carburant principal injecté dans le moteur à combustion interne (1).

5. Système de commande d'émissions selon l'une quelconque des revendications 1 à 4, dans lequel le carburant supplémentaire est injecté dans le passage d'échappement (3) pendant une course de combustion.

6. Système de commande d'émissions selon l'une quelconque des revendications 1 à 5, dans lequel le catalyseur (4) est supporté sur un filtre particulaire.

7. Procédé de commande d'un système de commande d'émissions pour un moteur à combustion interne (1), le système de commande d'émissions comprenant un catalyseur (4) disposé dans un passage d'échappement (3) du moteur à combustion interne (1) pour purifier les gaz d'échappement qui entrent dans le catalyseur (4), comprenant les étapes consistant à :
détecter un état de fonctionnement de moteur du moteur à combustion interne (1) ;
élever une température du catalyseur dans un mode qui est sélectionné à partir d'une pluralité de modes en se basant sur l'état de fonctionnement du moteur ; dans lequel
lorsque le moteur à combustion interne se trouve dans un état de faible charge, la température de catalyseur est élevée dans un premier mode sélectionné à partir de la pluralité de modes en augmentant une quantité de carburant principal injecté dans le moteur à combustion interne (1) de façon à rendre un rapport air-carburant plus proche d'une valeur stoechiométrique, et en délivrant un carburant dans le passage d'échappement (3) ;
lorsque le moteur à combustion interne se trouve dans un état de charge intermédiaire, la température de catalyseur est élevée dans un deuxième mode sélectionné à partir de la pluralité de modes, en injectant un carburant supplémentaire après avoir injecté le carburant principal dans le moteur à combustion interne (1), et en ajoutant le carburant dans le passage d'échappement (3) ; et
lorsque le moteur à combustion interne se trouve dans un état de charge élevée, la température de catalyseur est élevée dans un troisième mode sélectionné à partir de la pluralité de modes, en ajoutant le carburant dans le passage d'échappement (3).

8. Procédé selon la revendication 7, dans lequel l'étape consistant à élever la température du catalyseur est exécutée lorsque la température de catalyseur du catalyseur (4) doit être augmentée pour régénérer le catalyseur suite à l'empoisonnement au soufre, et lorsque l'état de fonctionnement du moteur se trouve dans un état d'accélération ou dans un état constant.

9. Procédé selon la revendication 7 ou la revendication 8, comprenant de plus une étape consistant à supprimer l'empoisonnement au soufre en supprimant l'empoisonnement au soufre d'une manière telle qu'une quantité d'air nouveau admis dans le moteur à combustion interne (1) est réduite pour rendre un rapport air-carburant plus proche d'une valeur stoechiométrique, et un carburant est ajouté vers le passage d'échappement (3) pour rendre le rapport air-carburant des gaz d'échappement circulant à travers le catalyseur (4) riche.

10. Procédé selon l'une quelconque des revendications 7 à 9, dans lequel lorsque le moteur à combustion interne se trouve dans un état de vitesse de moteur élevée et de charge élevée, la température de catalyseur est élevée en brûlant normalement le carburant principal injecté dans le moteur à combustion interne (1).

11. Procédé selon l'une quelconque des revendications 7 à 10, dans lequel le carburant supplémentaire est injecté dans le passage d'échappement (3) pendant une course de combustion.

12. Procédé selon l'une quelconque des revendications 7 à 11, dans lequel le catalyseur (4) est supporté sur un filtre particulaire.
